# EUROPEAN PATENT SPECIFICATION

(11) **EP 0 880 847 B1**
(45) Date of publication and mention of the grant of the patent: **25.01.2006**
(21) Application number: 97910575.6
(22) Date of filing: 13.11.1997
(51) Int. Cl.: H04M 19/04

(54) **TELECOMMUNICATION DEVICE AND A METHOD FOR PROVIDING RINGING INFORMATION**
TELEKOMMUNIKATIONSVORRICHTUNG UND -VERFAHREN ZUR LIEFERUNG VON RUFTONINFORMATIONEN
DISPOSITIF DE TELECOMMUNICATION ET PROCEDE DE FOURNITURE D'INFORMATIONS DE SONNERIE

(30) Priority: 06.12.1996 EP 96402656
(43) Date of publication of application: 02.12.1998
(73) Proprietor: Koninklijke Philips Electronics N.V., 5621 BA Eindhoven (NL)
(72) Inventor: RIZET, Nadège, NL-5656 AA Eindhoven (NL); DAANEN, Antonius, Martinus, Jacobus, NL-5656 AA Eindhoven (NL)
(86) International application number: PCT/IB1997/001432
(87) International publication number: WO 1998/025397

(56) References cited:
- US-A- 5 481 599

## Description

The present invention relates to a telephone comprising a ringing information memory and a ringing information memory updating means coupled to the ringing information memory, the ringing information being connected to a public database containing a variety of alternative forms of ringing information.

The present invention further relates to a method for providing ringing information comprising the steps of downloading ringing information from a public database comprising a variety of alternative forms of ringing information and updating the ringing information memory with the downloaded ringing information.

DE-U-9402141 discloses a telephone that comprises a memory containing ringing information such as voice, music etcetera, which ringing information is stored in the ringing memory for being read out and played when the device rings. This memory in the telephone contains several different kinds of ringing information, which is selectable there from. In addition the known telephone comprises locally provided ringing information updating means such as a microphone, a serial input interface, and memory registration means. Thus a proper type of ringing information can be input in the ringing information memory so as to update the ringing information. However this obstructs the possibility of changing to those melodies, which are not available to an individual user of the telephone, and which could be popular at a certain moment in time. In addition only a limited number of melodies can be prepared and stored in the ringing memory, because of the limited qualifications and means available to every individual user of the telephone. Furthermore certain preferred melodies will not be registerable or can not be registered with a required degree of professionalism or quality or are simply not available or within the reach of a nominal user of the telephone.

US 5,481,599 discloses a telephone that detects and intercepts a telephone company's ring signal and intercepts the telephone company's ring signal, suppressing the telephone's existing ringer, and substituting instead, a user selected audio segment. A choice of audio segments may be made from an internal memory device or as downloaded from a supplier of such audio segments by high-speed modem. To download audio segments, a user dials a service bureau's number and, when connected, is instructed to select one of a plurality of stored audio segments available for downloading. The user listens to the different audio segments offered and downloads the desired segments by using his telephone keypad.

It is an object to provide a multi selection, high quality ringing information extend/change feature to a telephone, without however increasing price and volume of the memory in the telephone.

To this end the telephone according to the invention is characterised by comprising a display means for selecting a ringing information item from the public database on the basis of at least one of a name and a reference displayed on the display means. This reduces the trespassing on communication time over the communication link. It is an advantage of the telephone according to the present invention that the size of the ringing information memory therein can be reduced to a size necessary to contain, at wish just, one ringing information item, such as a melody, song, music, speech or phrase. This reduces the memory size, volume, and price as well as, the necessary hardware to read out said memory. In addition this memory reduction does however not reduce, but extend the number and the variety of user selectable ringing information items, because the content of the ringing memory means in the form of ringing information is updateable from the publicly available database, at wish on a regular basis. So the personal touch and the diversity of adjustments on this point to the wishes of each individual owning a telephone can be honoured in a recognisable, individualised way, without expanding hardware or hardware requirements beyond the technical means normally available to an average user. This high quality, multi diverse extension can be implemented very simple on for example a personal, mobile, cellular, or cordless telephone, facsimile or automatic telephone answering machine etcetera. The public database can be managed by a manufacturer of the telephone, or any other professionally suitable instance.

In an embodiment the telephone according to the invention is characterised in that the ringing information memory updating means is connected to the data base via a long distance communication link. Such a database can comprise one or more remotely situated databases, which are connectable directly to the telephone and to the ringing information memory, but preferably there is a database which can be consulted, generally upon payment of an appropriate remuneration, by means of a generally long distance communication link to each subscriber of the telephone, in order to select and at wish download his favourite ringing item.

In a further embodiment the telephone according to the invention is characterised in that there is provided in selection means, in particular user friendly menu driven, preferably easily software implemented, selection means coupled to the database for selecting user defined forms of ringing information.

At present the invention will be elucidated further together with the additional advantages with reference to the accompanying drawing. In the drawing:
Fig. 1 shows a possible implementation of in particular the telephone according to the present invention; and
Fig. 2 shows in a flowchart a possible sequence of events, which can take place between the telephone of figure 1 and a network containing a database.

Throughout the figures the same reference numerals are used for the same features.

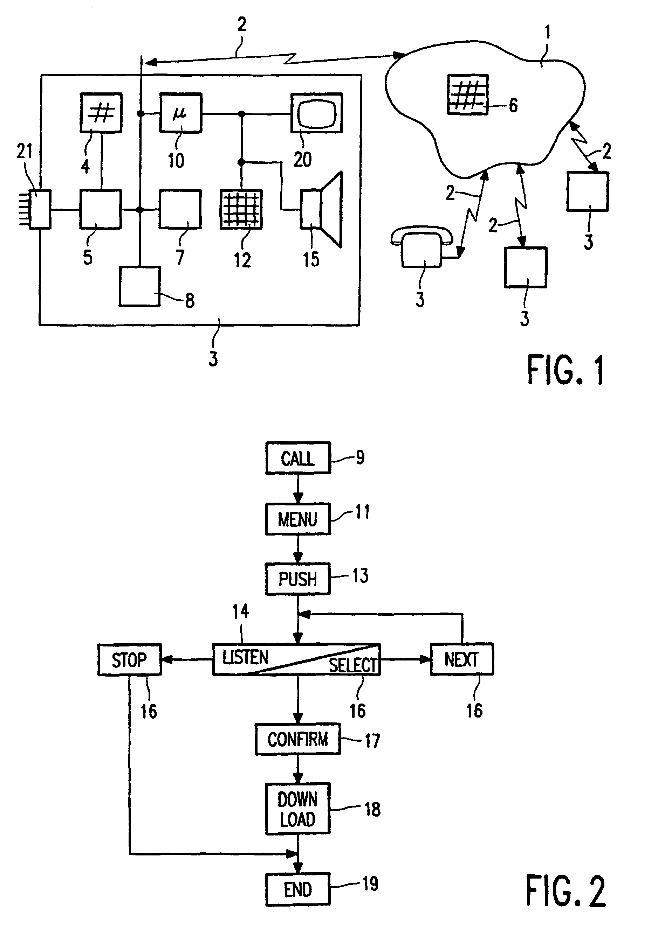

In an exemplary way figure 1 shows a network 1, such as for instance a telephone network or ISDN network, which connects through a communication link 2, and a number of telephones 3. In a usual fashion the telephones are capable of communicating with one another. Each telephone 3 is provided with a ringing information memory 4, wherein information or data is stored about the sound a telephone makes when it rings. Each telephone 3 is also provided with ringing information memory updating means 5, which means 5 are connected to the memory 4, in order to be able to update the content of the memory 4. The memory updating means 5 is connected via the communication link 2 to a database 6, which is present somewhere in the network 1. The database is filled with alternative forms of ringing information such as melodies, songs, sound, soundtracks, speech etcetera. The communication link 2 is connected to means 7 for downloading at least one or the alternative forms of ringing information to the ringing information memory 4. There is provided in selection means 8 connected to the memory updating means 5 and via the communication link 2 to the database 6 in order to be capable of selectively providing ringing information items from the database 6 to the memory 4 in a way to be described with reference to the flowchart of figure 2.

Figure 2 shows a flowchart for elucidating one possible way of implementing the updating of the ringing information present in the ringing information memory 4. Of course there are several other ways of implementing the ringing information updating feature described here, which will be apparent to the man skilled in the relevant art. Block 9 represents the establishing of a telephone call through a number to make a connection via the telecommunication link 2 to the database 6, usually through a modem (not shown). A suitably programmed and connected microprocessor 10 in telephone 3 provides a guided menu (block 11), wherein choices can be made by pushing appropriate keys on a keyboard 12, to choose (block 13) for example for ringing information in the form of music, tones, speech etcetera to be downloaded by the downloading means 7. In block 14 the chosen ringing information can at wish be prelistened by audio producing means 15 to hear the melody, speech etcetera, before being downloaded. The selection means 8 provide for a stop, next and selection in blocks 16 of a preferred and in block 17 confirmed choice of ringing information. In block 18 the means 7 download the confirmed choice and block 19 ends the session. The telephone 3 contains a video display means 20 for selecting ringing information items in the database 6 on the basis of the name displayed on the video display means 20 or a reference to a particular ringing item, generally by displaying characters on the means 20. The telephone 3 could contain an connector 21 connected to the ringing information updating means 5 for directly inputting updated ringing information to the updating means 5. The inputted information can then be user recorded in order to be further personalised.

In view of the foregoing it will be evident to a person skilled in the art that various modifications may be made within the scope of the present invention as hereinafter defined by the appended claims and that the present invention is thus not limited to the examples provided.

## Claims

1. Telephone (3) comprising a ringing information memory (4) and a ringing information memory updating means (5) coupled to the ringing information memory, the ringing information updating means being connected to a public database (6) comprising a variety of alternative forms of ringing information, **characterised by** comprising a display means (20) for selecting a ringing information item from the public database on the basis of at least one of a name and a reference displayed on the display means.

2. Telephone according to claim 1, **characterised in that** the ringing information memory updating means (5) is connected to the database (6) via a long distance communication link.

3. Telephone according to claim 2, **characterised in that** the communication link (2) is connected to means for downloading at least one or the alternative forms of ringing information to the ringing information memory (4).

4. Telephone according to claim 3, **characterised in that** the ringing information memory updating means (5) is connected to selection means (8) coupled to the database for selecting user defined forms of ringing information.

5. Telephone according to claim 4, **characterised in that** the selection means (8) is a menu driven selection means.

6. Telephone according to claim 1, 2, 3, 4, or 5, **characterised in that** the ringing information comprises audio and/or video information.

7. Telephone according to claim 6, **characterised in that** the audio information comprises at least one melody, and/or the video information at least comprises characters.

8. Telephone according to claim 6 or 7, **characterised in that** the telephone comprises audio producing means.

9. Telephone according to one of the foregoing claims, **characterised in that** the telephone is embodied as one of: a conventional telephone, a cordless telephone, a mobile telephone and a cellular telephone.

10. A method for providing ringing information to a telephone (3) having a ringing information memory (4) and a ringing information memory updating means (5) connected to the ringing information memory (4);
comprising the step of:
- enabling a downloading means of the telephone to download a ringing information item from a public database (6) comprising a variety of alternative forms of ringing information to the ringing information memory (4);
**characterised by** further comprising the step of:
- enabling a user to select the ringing information item from the public database on the basis of at least one of a name and a reference displayed on a display means of the telephone.

## Patentansprüche

1. Telefon (3), das einen Rufton-Informationsspeicher (4) und ein an den Rufton-Informationsspeicher gekoppeltes Rufton-Informationsspeicher-Aktualisierungsmittel (5) umfasst, wobei die Ruftoninformations-Aktualisierungsmittel mit einer öffentlichen Datenbank (6) verbunden sind, die eine Vielzahl von alternativen Formen von Ruftoninformationen umfasst, **dadurch gekennzeichnet, dass** es ein Anzeigemittel (20) zum Auswählen eines Rufton-Informationselements von der öffentlichen Datenbank basierend auf mindestens einem von einem Namen und einem Verweis, die auf dem Anzeigemittel angezeigt werden, umfasst.

2. Telefon nach Anspruch 1, **dadurch gekennzeichnet, dass** das Rufton-Informationsspeicher-Aktualisierungsmittel (5) über eine Fernkommunikationsverbindung mit der Datenbank (6) verbunden ist.

3. Telefon nach Anspruch 2, **dadurch gekennzeichnet, dass** die Kommunikationsverbindung (2) mit Mitteln zum Herunterladen von mindestens einer der alternativen Formen von Ruftoninformationen in den Rufton-Informationsspeicher (4) verbunden ist.

4. Telefon nach Anspruch 3, **dadurch gekennzeichnet, dass** das Rufton-Informationsspeicher-Aktualisierungsmittel (5) mit Auswahlmitteln (8) verbunden ist, die zum Auswählen von benutzerdefinierten Formen von Ruftoninformationen mit der Datenbank gekoppelt sind.

5. Telefon nach Anspruch 4, **dadurch gekennzeichnet, dass** das Auswahlmittel (8) ein menügesteuertes Auswahlmittel ist.

6. Telefon nach Anspruch 1, 2, 3, 4 oder 5, **dadurch gekennzeichnet, dass** die Ruftoninformationen Audio- und/oder Videoinformationen umfassen.

7. Telefon nach Anspruch 6, **dadurch gekennzeichnet, dass** die Audioinformationen mindestens eine Melodie umfassen, und/oder die Videoinformationen mindestens Zeichen umfassen.

8. Telefon nach Anspruch 6 oder 7, **dadurch gekennzeichnet, dass** das Telefon Audioerzeugungsmittel umfasst.

9. Telefon nach einem der vorhergehenden Ansprüche, **dadurch gekennzeichnet, dass** das Telefon als eines von Folgendem ausgeführt ist: ein herkömmliches Telefon, ein schnurloses Telefon, ein Mobiltelefon und ein zellulares Telefon.

10. Verfahren zum Liefern von Ruftoninformationen an ein Telefon (3), das einen Rufton-Informationsspeicher (4) und ein an den Rufton-Informationsspeicher (4) gekoppeltes Rufton-Informationsspeicher-Aktualisierungsmittel (5) umfasst,
das den folgenden Schritt umfasst:
- Ermöglichen des Herunterladens eines Rufton-Informationselements von einer öffentlichen Datenbank (6), die eine Vielzahl von alternativen Formen von Ruftoninformationen umfasst, in den Rufton-Informationsspeicher (4) durch ein Mittel des Telefons zum Herunterladen,
**dadurch gekennzeichnet, dass** es ferner den folgenden Schritt umfasst:
- Ermöglichen des Auswählens des Rufton-Informationselements von der öffentlichen Datenbank durch den Benutzer basierend auf mindestens einem von einem Namen und einem Verweis, die auf dem Anzeigemittel des Telefons angezeigt werden.

## Revendications

1. Téléphone (3) comprenant une mémoire d'informations de sonnerie (4) et un moyen de mise à jour de la mémoire d'informations de sonnerie (5) connecté à la mémoire d'informations de sonnerie, le moyen de mise à jour des informations de sonnerie étant connecté à une base de données publique (6) comprenant différentes variantes de formes d'informations de sonnerie, **caractérisé par** le fait de comprendre un moyen d'affichage (20) pour sélectionner un élément d'information de sonnerie à partir de la base de données publique, sur la base d'au moins un élément parmi un nom et une référence affichés sur le moyen d'affichage.

2. Téléphone selon la revendication 1, **caractérisé en ce que** le moyen de mise à jour de la mémoire d'informations de sonnerie (5) est connecté à la base de données (6) par l'intermédiaire d'une liaison de communication interurbaine.

3. Téléphone selon la revendication 2, **caractérisé en ce que** la liaison de communication (2) est connectée à un moyen destiné à télécharger au moins l'une des variantes de formes d'informations de sonnerie vers la mémoire d'informations de sonnerie (4).

4. Téléphone selon la revendication 3, **caractérisé en ce que** le moyen de mise à jour de la mémoire d'informations de sonnerie (5) est connecté à un moyen de sélection (8) connecté à la base de données pour sélectionner des formes d'informations de sonnerie définies par l'utilisateur.

5. Téléphone selon la revendication 4, **caractérisé en ce que** le moyen de sélection (8) est un moyen de sélection guidé par menus.

6. Téléphone selon la revendication 1, 2, 3, 4 ou 5, **caractérisé en ce que** les informations de sonnerie comprennent des informations audio et/ou vidéo.

7. Téléphone selon la revendication 6, **caractérisé en ce que** les informations audio comprennent au moins une mélodie, et/ou **en ce que** les informations vidéo comprennent au moins des caractères.

8. Téléphone selon la revendication 6 ou 7, **caractérisé en ce que** le téléphone comprend un moyen de production d'audio.

9. Téléphone selon l'une quelconque des revendications précédentes,
**caractérisé en ce que** le téléphone prend l'une des formes suivantes : un téléphone conventionnel, un téléphone sans fil, un téléphone mobile et un téléphone cellulaire.

10. Procédé destiné à fournir des informations de sonnerie à un téléphone (3) présentant une mémoire d'informations de sonnerie (4) et un moyen de mise à jour de la mémoire d'informations de sonnerie (5) connecté à la mémoire d'informations de sonnerie (4), comprenant l'étape suivante :
- permettre à un moyen de téléchargement du téléphone de télécharger un élément d'information de sonnerie à partir d'une base de données publique (6), comprenant différentes variantes de formes d'informations de sonnerie, vers la mémoire d'informations de sonnerie (4),
**caractérisé par** le fait de comprendre en outre l'étape suivante :
- permettre à un utilisateur de sélectionner l'élément d'information de sonnerie à partir de la base de données publique sur la base d'au moins un élément parmi un nom et une référence affichés sur un moyen d'affichage du téléphone.
